# EUROPÄISCHE PATENTSCHRIFT

(11) **EP 4 077 075 B1**
(45) Veröffentlichungstag und Bekanntmachung des Hinweises auf die Patenterteilung: **20.09.2023**
(21) Anmeldenummer: 20820918.9
(22) Anmeldetag: 08.12.2020
(51) Int. Cl.: B60T 8/17, B60T 13/66

(54) **SYSTEMARCHITEKTUR EINES ELEKTRONISCHEN BREMSSYSTEMS**
ELECTRONIC BRAKE SYSTEM ARCHITECTURE
ARCHITECTURE D'UN SYSTÈME DE FREINAGE ÉLECTRONIQUE

(30) Priorität: 16.12.2019 DE 102019134466
(43) Veröffentlichungstag der Anmeldung: 26.10.2022
(73) Patentinhaber: KNORR-BREMSE Systeme für Nutzfahrzeuge GmbH, 80809 München (DE)
(72) Erfinder: GSCHEIDLE, Wolfgang, 71720 Oberstenfeld (DE); RAMMERT, Alexander, 70806 Kornwestheim (DE); RÖTHER, Friedbert, 74389 Cleebronn (DE)
(86) Internationale Anmeldenummer: PCT/EP2020/085090
(87) Internationale Veröffentlichungsnummer: WO 2021/122163

(56) Entgegenhaltungen:
- EP-A1- 3 421 309
- DE-A1- 10 320 608
- DE-A1-102015 012 378
- DE-C1- 19 814 867

## Beschreibung

Die vorliegende Erfindung betrifft eine Weiterentwicklung einer Systemarchitektur eines elektronischen Bremssystems (EBS) eines Kraftfahrzeugs, insbesondere eines Nutzfahrzeugs.

Herkömmliche, im Stand der Technik bekannte EBS-Systeme eines Nutzfahrzeugs, weisen in der Regel eine Architektur aus einer zentralen Steuereinheit (ECU), mindestens einem Druckregelmodul (EPM), in dem Druckregelventile enthalten sind, und Drucksteuerventilen (PCV), welche jeweils einem Bremszylinder eines Rades des Fahrzeugs zugeordnet sind, auf. Der Bremswunsch des Fahrers wird anhand eines Fußbremsmoduls erfasst und dort in ein elektrisches Signal umgewandelt. Ausgehend von diesem Signal, berechnet die ECU unter Berücksichtigung weiterer Faktoren, wie beispielsweise der Fahrzeugmasse oder der Achslastverteilung, einen optimalen Sollbremsdruck, der an die jeweiligen Bremszylinder, welche an den Rädern angeordnet sind, weitergegeben werden soll.

Die Information des Sollbremsdrucks wird dann als elektrisches Signal beispielsweise über einen CAN-Bus an das eine oder an mehrere Druckregelmodule weitergegeben. Diese sind an einen Druckvorratsbehälter angeschlossen, welcher den Vorratsdruck des Systems bereitstellt. Ausgehend von dem Vorratsdruck werden die Druckregelventile des Druckregelmoduls von der Steuereinheit so gesteuert, dass das Druckregelmodul den angeforderten Sollbremsdruck den jeweiligen Bremszylindern an den Rädern bereitstellt.

Um zu verhindern, dass beim Abbremsen (Anti-Blockier-System) beziehungsweise Beschleunigen (Anti-Schlupf-Regelung) des Fahrzeugrades Schlupf zwischen Rad und Fahrbahnoberfläche besteht, können zusätzlich Drucksteuerventile zum Einsatz kommen, welche zwischen EPM und dem jeweiligen Bremszylinder des Rades angeordnet sind und durch die zentrale Steuereinheit gesteuert werden. Dazu wird der Schlupf der Räder anhand von Raddrehzahlsensoren (WSS) in den zugehörigen EPMs erfasst, wobei die WSS ebenfalls jedem einzelnen Rad zugeordnet sind.

Erkennt ein Sensor beim Abbremsen des Fahrzeugs Schlupf an einem Rad, weist die ECU das entsprechende Drucksteuerventil an, den an des entsprechenden Bremszylinders anliegenden Bremsdruck nicht zu erhöhen oder sogar zu verringern, um das Rad weniger stark abzubremsen und somit den auftretenden Schlupf zu verringern.

In herkömmlichen EBS-Systemen ist pro Achse oder Doppelachse des Fahrzeugs ein ein- oder zweikanaliges EPM vorgesehen, welches sich in räumlicher Nähe zu dieser Achse befindet. In mehrkanaligen EPMs können für jeden Kanal unterschiedliche Bremsdrücke erzeugt und an die Bremszylinder geleitet werden. Die Raddrehzahlsensoren zur Erfassung des Schlupfs eines Rades sind dabei mit dem entsprechenden EPM verbunden. Von dort werden die Informationen über die CAN-Bus-Verbindung zwischen Druckregelmodul und zentrale Steuereinheit an diese übermittelt.

Bei einfachen Systemen kann an einer Achse auch nur ein gemeinsames einkanaliges Druckregelmodul zum Einsatz kommen, das beide Räder der Achse mit demselben Bremsdruck versorgt. Um bei unterschiedlichem Schlupf beider Räder der Achse ein Blockieren des Rades mit dem höchsten Schlupf zu vermeiden, können an diesen Rädern Drucksteuerventile in die pneumatische Zuleitung zwischen dem Druckregelmodul und dem Bremszylinder angeordnet werden, über die das überbremste Rad einzeln geregelt werden kann. Die Drucksteuerventile sind dabei immer an die zentrale Steuereinheit angeschlossen. Diese Systemarchitektur hat jedoch den Nachteil, dass bei einem Ausfall eines Druckregelmoduls die Raddrehzahlsensorsignale nicht an die Steuereinheit weitergegeben werden können. Unter einem Ausfall ist dabei zu verstehen, dass der elektronische Teil des Druckregelmoduls ausfällt. In Folge dessen wird die ECU das gestörte EPM abschalten. Das EPM ist somit nicht mehr in der Lage, die von der ECU übermittelten Signale zu verarbeiten und den berechneten Solldruck einzustellen. Stattdessen wird der Fahrerwunsch über ein pneumatisches Ersatzsystem an das Druckregelmodul weitergegeben und dort eine konventionelle Bremsung mit pneumatischem Steuerdruck eingestellt, der dann an den Bremszylindern anliegt.

Da jedoch die Raddrehzahlsensorsignale bei Ausfall des EPMs nicht an die Steuereinheit übermittelt werden, kann somit keine ABS-Regelung, bzw. ASR erfolgen. Dadurch kann es bei Bremsungen zu blockierenden Rädern kommen, wodurch das Fahrzeug unkontrollierbar ausbrechen oder seine Lenkfähigkeit verlieren kann, was wiederum eine starke Einschränkung der Sicherheit des Fahrzeugs nach sich zieht.

Die DE 198 14 867 C1 beschreibt ein Verfahren und eine Vorrichtung zur Bremskraftaufteilung auf die Achsen eines mit einer Blockierschutzeinrichtung ausgestatteten Kraftfahrzeuges.

Es ist somit Ziel der vorliegenden Erfindung eine Systemarchitektur des EBS zu schaffen, bei dem ein kontrollierter Betrieb des Fahrzeugs weiterhin gewährleistet werden kann, auch wenn ein oder mehrere Druckregelmodule des Fahrzeugs defekt ist bzw. sind. Dieses Ziel wird mit dem vorgeschlagenen Gegenstand gemäß des unabhängigen Anspruchs erreicht. Vorteilhafte Weiterbildungen der Erfindung sind in den Unteransprüchen enthalten.

Ein elektronisches Bremssystem gemäß der vorliegenden Erfindung weist eine zentrale Steuereinheit auf, welche dazu konfiguriert ist, mindestens ausgehend von einem Bremssignal und den Daten wenigstens eines Raddrehzahlsensors, wenigstens ein Druckregelmodul und wenigstens ein Drucksteuerventil zu steuern. Das Druckregelmodul ist dabei dazu konfiguriert, ausgehend von dem Signal der zentralen Steuereinheit und damit der angeforderten Bremskraft einen Sollbremsdruck bereitzustellen, der dazu bestimmt ist in wenigstens einen Bremszylinder eines Fahrzeugrades eingeleitet zu werden. Ferner weist das System wenigstens einen Raddrehzahlsensor auf, der einem Fahrzeugrad zugeordnet ist und dazu konfiguriert ist die Drehzahl des Rades zu bestimmen. Darüber hinaus weist das System ein wenigstens Drucksteuerventil auf, welches dem Bremszylinder des wenigstens einen Rades zugeordnet ist und dazu konfiguriert ist den vom Druckregelmodul erzeugten Sollbremsdruck radschlupfabhängig zu steuern.

Der wenigstens eine Raddrehzahlsensor weist dabei eine elektrische Verbindung zur zentralen Steuereinheit auf, die dazu konfiguriert ist im Raddrehzahlsensor erfasste Daten direkt zu übertragen. Es besteht also eine direkte Verbindung zwischen Raddrehzahlsensor und zentraler Steuereinheit. Unter "direkter Verbindung/Übertragung" wird im Rahmen dieser Erfindung verstanden, dass die Daten ohne in einem weiteren Bestandteil des Systems zwischengespeichert oder verarbeitet zu werden über eine direkte elektrische Verbindung übermittelt werden.

Erfindungsgemäß sind die zentrale Recheneinheit und das wenigstens eine Druckregelmodul in einer zentralen Einheit angeordnet. Bei Ausführungsformen mit mehr als einem Druckregelmodul sind diese ebenfalls in der zentralen Einheit angeordnet. Unter einer zentralen Einheit wird im Rahmen dieser Erfindung eine bauliche Einheit verstanden die derart beschaffen ist, sodass diese beiden Komponenten des Systems, welche die bauliche Einheit des Systems bilden, in einem Stück montiert und demontiert werden können. Der Vorteil einer Anordnung als eine zentrale Einheit besteht darin, dass für Wartungs- oder Instandhaltungszwecke die wesentlichen Komponenten des EBS dem Fahrzeug entnommen und wieder eingesetzt werden können. Dadurch wird die Handhabung mit dem System verbessert und somit der Zeit- und Kostenaufwand für Wartung und Instandhaltung reduziert.

In einer auf dieser Ausgestaltung basierenden Ausführungsform weisen die zentrale Steuereinheit und das wenigstens eine Druckregelmodul lediglich ein Gehäuse auf. Auf diese Weise kann die Kompaktheit und damit die Handhabung des Systems weiter verbessert werden und aufwändige sowie platzeinnehmende Gehäusekonstruktionen der einzelnen Komponenten können vermieden werden. Weiterhin vorteilhaft ist eine Ausführungsform der Erfindung, in der jedes zu bremsende Rad des Fahrzeugs über einen eigenen Raddrehzahlsensor verfügt. Somit kann der Schlupf jedes Rades erkannt werden und die Bremsung des Fahrzeugs optimiert werden.

Insbesondere vorteilhaft ist diese Ausführungsform dann, wenn zusätzlich jeder zu steuernde Bremszylinder eines Rades des Fahrzeugs ein Drucksteuerventil aufweist. Somit kann sichergestellt werden, dass jedes Rad individuell an seinem optimalen Bremspunkt betrieben werden kann und dadurch die Bremsung optimiert werden kann und gleichzeitig die Fahrdynamik des Fahrzeugs zu jedem Zeitpunkt der Bremsung kontrollierbar bleibt.

Eine weitere vorteilhafte Ausführungsform der Erfindung weist neben den Raddrehzahlsensoren weitere Sensoren, wie insbesondere Sensoren zur Erfassung des an den Bremszylindern anliegenden Bremsdrucks, auf, welche ebenfalls ihre aufgenommenen Daten an die Steuereinheit per direkter Übertragung übermitteln. Anhand der Bremsdrucksensoren ist es beispielsweise möglich zu überprüfen, ob der Sollbremsdruck, welcher vom Druckregelmodul eingestellt wird, auch tatsächlich an den Bremszylindern anliegt, oder ob die Steuereinheit einen höheren Sollbremsdruck einstellen muss, um die gewünschte Bremswirkung zu erzielen. Somit kann die Qualität der Bremsung durch weitere Sensoren weiter erhöht werden oder Rückschlüsse auf die Notwendigkeit einer Instandsetzung gezogen werden, wodurch die Zuverlässigkeit des Bremssystems erhöht werden kann.

In einer weiteren vorteilhaften Ausführungsform der Erfindung weist das Bremssystem für jede Achse oder Doppelachse des Fahrzeugs ein eigenes Bremsmodul auf, welches den erforderlichen Sollbremsdruck für die Bremszylinder der jeweiligen Achse bereitstellt. Auf diese Weise kann sichergestellt werden, dass die Versorgung mit Bremsdruck individuell auf jede Achse abgestimmt wird und die Bremsleistung dadurch weiter verbessert wird. Durch die Verwendung mehrerer Druckregelmodule kann ebenfalls sichergestellt werden, dass bei einem Ausfall eines Druckregelmoduls der übrige Teil des Bremssystems weiterhin regulär betrieben werden kann. Auf diese Weise kann die Zuverlässigkeit des Bremssystems weiter erhöht werden.

Im Folgenden wird ein Ausführungsbeispiel der Erfindung anhand der zugehörigen Figuren näher beschrieben. Die Figuren zeigen im Einzelnen:
- **Fig.** 1: einen schematischen Aufbau eines elektronischen Bremssystems gemäß dem Stand der Technik
- Fig. 2: einen schematischen Aufbau einer Ausführungsform eines erfindungsgemäßen elektronischen Bremssystems
- **Fig. 3**: einen schematischen Aufbau der Ausführungsform aus Fig. 2 in einem Nutzfahrzeug

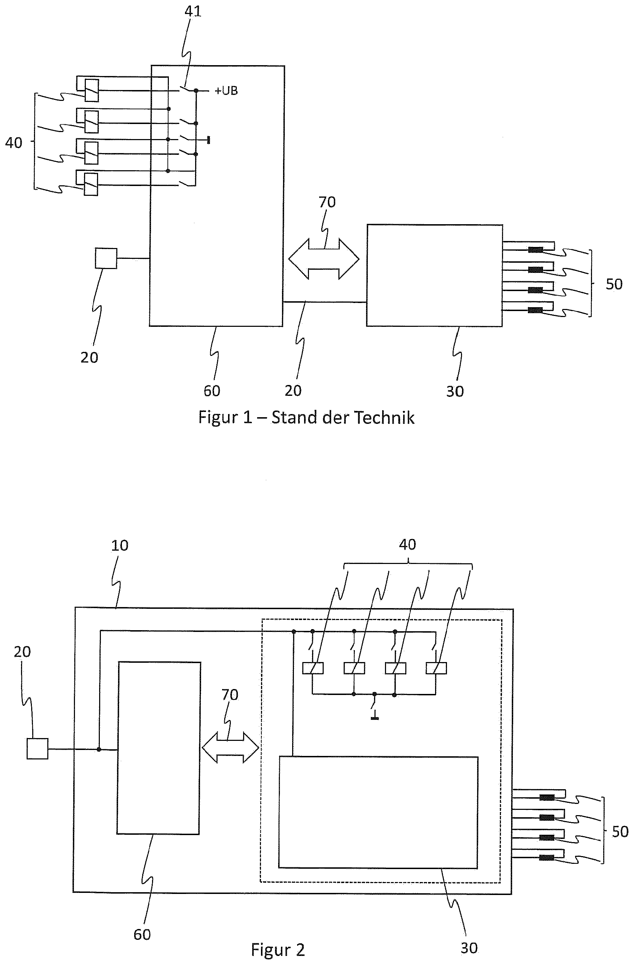

**Fig. 1** zeigt den schematischen Aufbau eines elektronischen Bremssystems gemäß dem Stand der Technik.

Die Steuereinheit 60 ist an eine Stromversorgung 20 angeschlossen und steuert über elektronische Schalter 41 die vier Drucksteuerventile 40, welche jeweils einem Rad des Fahrzeugs zugeordnet sind. Zudem steuert die Steuereinheit 60 ebenfalls das Druckregelmodul 30. Die Datenübertragung ist dabei anhand eines CAN-Buses 70 sichergestellt. Denkbar sind selbstverständlich auch andere Formen der Datenübertragung. Die Stromversorgung des Druckregelmoduls 30 ist ebenfalls über die Stromversorgung 20 der Steuereinheit 60 sichergestellt. Weiterhin erfassen Raddrehzahlsensoren 50 die Drehzahlen der Räder des Fahrzeugs, wobei jeder Sensor einem Rad zugeordnet ist und dessen Drehzahl erfasst. Die Raddrezahlsensoren 50 stehen dabei nicht direkt mit der Steuereinheit 60 in Verbindung, sondern kommunizieren über das Druckregelmodul 30.

Erfasst einer der Raddrehzahlsensoren 50 beim Bremsen des Fahrzeugs Schlupf zwischen einem Rad des Fahrzeugs und der Fahrbahn, werden diese Informationen an die Steuereinheit 60 über das Druckregelmodul 30 geleitet. Dort wird das dem Rad, an dem der Schlupf festgestellt wurde, entsprechende Drucksteuerventil 40 derart gesteuert, dass der Bremsdruck des betreffenden Bremszylinders 85 reduziert wird, bis kein Schlupf mehr vom Raddrehzahlsensor 50 festgestellt wird und die Traktion wieder hergestellt wird. Eine ABS-Bremsung erfolgt.

Ein ähnliches Funktionsprinzip wird angewendet, sollte ein Raddrehzahlsensor 50 während des Beschleunigens des Fahrzeugs einen Schlupf feststellen. In diesem Fall wird von der zentralen Steuereinheit 60 der an dem entsprechenden Bremszylinder anliegende Druck erhöht und dadurch das durchdrehende Rad abgebremst, sodass kein Schlupf auftritt.

Bei einem Ausfall des Druckregelmoduls 30, beispielsweise aufgrund einer elektrischen Störung, können bei bisherigen Systemen keine Daten mehr von den Raddrehzahlsensoren 50 an die Steuereinheit 60 übermittelt werden. Folglich kann die Steuereinheit 60 auch die Drucksteuerventile 40 nicht so steuern, dass eine ABS-Bremsung oder eine Anti-Schlupf-Regelung erfolgen kann, was sich wie oben bereits beschrieben insbesondere beim Abbremsen negativ auf die Fahrzeugstabilität und somit die Sicherheit des Fahrzeugs auswirken kann.

Unter der Bezeichnung "Ausfall eines Druckregelmoduls" wird im Rahmen dieser Erfindung verstanden, dass der elektronische Teil des Druckregelmoduls 30 ausfällt oder z.B. durch einen aufgetretenen Defekt von der ECU abgeschaltet werden muss, sodass die Steuereinheit 60 nicht mehr in die Bereitstellung des Bremsdrucks eingebunden werden kann. Aus dem Stand der Technik bekannte elektronische Bremssysteme weisen für diesen Fall ein pneumatisches Ersatzsystem (Backup) auf. Dabei wird der Bremswunsch des Fahrers über das vorhandene Fußbremsmodul 83 in einen pneumatischen Steuerdruck umgewandelt, in dessen Abhängigkeit dann im Druckregelmodul 30 der Bremsdruck erzeugt wird. Auf diese Weise kann weiterhin ein veränderbarer Bremsdruck an den Bremszylindern 85 des Fahrzeugs zur Verfügung gestellt werden, auch wenn die zentrale Steuereinheit 60 nicht in die Steuerung des Bremsdrucks eingebunden werden kann. Eine ABS-Bremsung oder eine Anti-Schlupf-Regelung sind jedoch nicht mehr möglich.

**Fig. 2** zeigt den schematischen Aufbau einer Ausführungsform des erfindungsgemäßen elektronischen Bremssystems. Hierbei sind die Komponenten des EBS (Druckregelmodul 30, Drucksteuerventile 40, zentrale Steuereinheit 60) in einer zentralen Einheit 10 angeordnet. Ausführungen, in denen die Drucksteuerventile 40 außerhalb des Bremsmoduls 10 angeordnet sind, aber trotzdem weiterhin direkt von der Steuereinheit 60 angesteuert werden, sind jedoch ebenfalls denkbar und in der Praxis üblich.

Im Unterschied zu der in Fig. 1 dargestellten Systemarchitektur des EBS, sind die Raddrehzahlsensoren 50 direkt an die zentrale Einheit 10 angeschlossen. Darunter ist zu verstehen, dass sie durch die direkte Verbindung in der Lage sind, ihre Daten direkt ohne diese zunächst an das Druckregelmodul 30 zu leiten, wie in der Anordnung von Fig. 1, an die Steuereinheit 60 übermitteln können. Somit stehen der Steuereinheit 60 die Daten der Raddrehzahlsensoren 50 auch dann zur Verfügung, wenn das Druckregelmodul 30 ausfällt oder abgeschaltet wird. Die Steuereinheit kann somit weiterhin in das Bremssystem eingreifen und eine ABS-Bremsung sowie eine Anti-Schlupf-Regelung sind somit anhand der Sensordaten, welche der Steuereinheit 60 nun zur Verfügung stehen, über die Drucksteuerventile 40 möglich, wodurch die Bremsleistung und die Kontrollierbarkeit der Bremsung bzw. die Traktion und die Kontrollierbarkeit des Fahrzeugs beim Anfahren/Beschleunigen und damit die Sicherheit des Fahrzeugs verbessert werden kann.

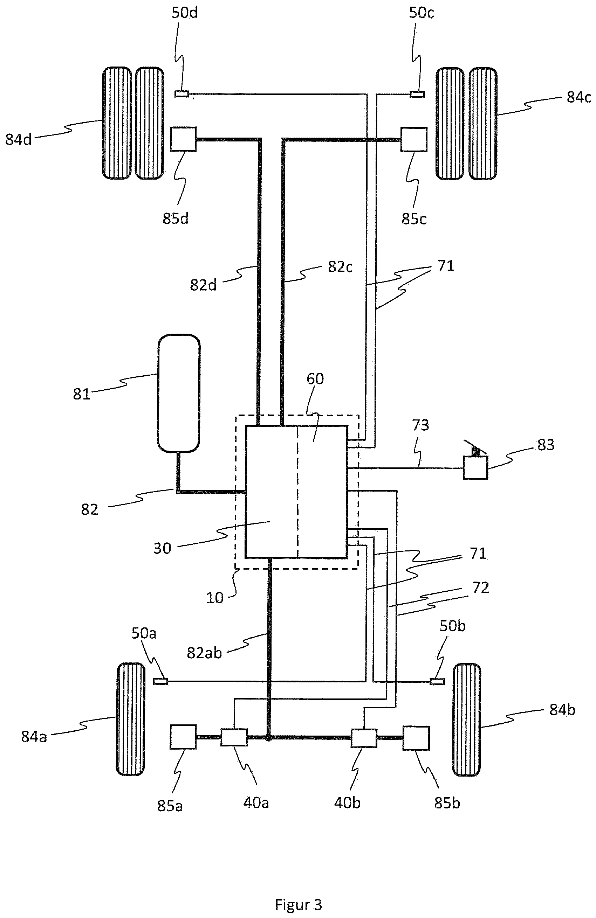

**Fig. 3** zeigt den schematischen Aufbau einer Ausführungsform der erfindungsgemäßen Systemarchitektur eines elektronischen Bremssystems in einem Fahrzeug. Bei dem Fahrzeug handelt es sich um ein zweiachsiges Nutzfahrzeug, welches an der Hinterachse Zwillingsräder (84c, 84d) aufweist. Selbstverständlich ist die Anwendung der Erfindung auf ein Fahrzeug, welches an der Hinterachse keine Zwillingsräder aufweist ebenfalls möglich.

Jedem der Räder (84a, 84b, 84c, 84d) ist jeweils ein Bremszylinder (85a, 85b, 85c, 85d) und den Vorderrädern (84a, 84b) zusätzlich ein Drucksteuerventil (40a, 40b) zugeordnet. Zudem befindet sich an jedem Rad (84a, 84b, 84c, 84d) jeweils ein Raddrehzahlsensor (50a, 50b, 50c, 50d), der die Drehzahl des entsprechenden Rades erfasst. Es sei angemerkt, dass die Erfindung selbstverständlich nicht auf die Verwendung von lediglich zwei Drucksteuerventilen limitiert ist, sondern auch Ausführungsformen möglich sind in denen jedes Rad des Fahrzeugs ein Drucksteuerventil aufweist. Die Drucksteuerventile (40a, 40b) befinden sich in der Druckleitung (82ab) zwischen einem Druckregelmodul 30 und den Bremszylindern der Vorderräder (84a, 84b), wobei das Druckregelmodul 30 seinerseits mit dem Druckspeicher 81 über die Vorratsleitung 82 in Verbindung steht. Bei der Druckleitung 82ab handelt es sich um eine einkanalige Druckleitung, welche den gleichen Bremsdruck an die Bremszylinder 85a und 85b überträgt. Bei den Druckleitungen 82c und 82d handelt es sich um getrennte Druckleitungen, anhand derer unterschiedliche Bremsdrücke an die Bremszylinder 85d bzw. 85 c der Hinterräder (84c, 84d) geleitet werden können. Bei dem in der Ausführungsform der Figur 3 eingesetzten Druckregelmodul 30 handelt es sich also um ein Druckregelmodul mit drei Kanälen. Es sei darauf hingewiesen, dass in anderen Ausführungsformen auch mehrere einzelne Druckregelmodule 30 eingesetzt werden können, beispielsweise je ein zweikanaliges Modul für jede Achse, welche dann unterschiedliche Bremsdrücke an die Bremszylinder der einzelnen Räder bereitstellen können.

Weiterhin befindet sich das Druckmodul 30 mitsamt der Steuereinheit 60 in einer zentralen Einheit 10. Ferner besteht über die Sensorleitung 71 eine elektrische Verbindung zwischen den Raddrehzahlsensoren (50a, 50b, 50c, 50d) und der Steuereinheit 60, über welche die von den Sensoren erfassten Daten direkt an die Steuereinheit 60 übermittelt werden können. Die zentrale Einheit 60 kann die Drucksteuerventile (40a, 40b) entsprechend den Bremsanforderungen und Raddrehzahlen ansteuern. Zudem verfügt das in Fig. 3 abgebildete elektronische Bremssystem über ein Fußbremsmodul 83, welches über eine Bremsleitung 73 Informationen an die Steuereinheit 60 übermitteln kann.

Möchte der Fahrzeugführer das Fahrzeug abbremsen, betätigt er das Fußbremsmodul 83. Dort wird in Abhängigkeit von der Betätigungsintensität die Betätigung in ein Bremssignal umgewandelt und über die Bremsleitung 73 an die Steuereinheit 60 übermittelt. Dort wird das Bremssignal unter Berücksichtigung verschiedener Faktoren, wie beispielsweise der Fahrzeugmasse oder der Achslastverteilung ein Sollbremsdruck berechnet, der an die Bremszylinder (85a, 85b, 85c, 85d) der vier Räder des Fahrzeugs geleitet werden soll, damit das Fahrzeug gemäß der vom Fahrer vorgegebenen Intensität verzögert.

Anschließend wird das Druckregelmodul 30 von der Steuereinheit 60 in der Art gesteuert, dass es den geforderten Sollbremsdruck einstellt. Dieser wird dann über die Druckleitungen (82ab, 82c, 82d) an die Bremszylinder (85a, 85b, 85c, 85d) geleitet, wodurch diese betätigt werden und das Fahrzeug gebremst wird. Es sei angemerkt, dass ebenfalls Ausführungsformen denkbar oder sogar vorteilhaft sind, bei denen pro Fahrzeugachse oder sogar pro Fahrzeugrad ein eigener Sollbremsdruck berechnet wird, sodass jedes Rad mit dem jeweiligen optimalen Bremsdruck betrieben wird.

Die Raddrehzahlsensoren (50a, 50b) erfassen die Drehzahlen der entsprechenden Vorderräder (84a, 84b) des Fahrzeugs und übermitteln diese über die Sensorleitung 71 direkt an die Steuereinheit 60. Erkennt diese anhand der Sensordaten bei einem Rad Schlupf während der Bremsung, steuert sie das entsprechende Drucksteuerventil (40a, 40b) des jeweiligen Rades (84a, 84b) über die Ansteuerleitung 72 an, um den an dem entsprechenden Bremszylinder (85a, 85b) anliegenden Bremsdruck zu reduzieren, bis kein Schlupf mehr erkannt wird, um so eine ABS-Bremsung durchzuführen. Wird Schlupf während des Beschleunigungsvorganges erkannt, wird wie bereits oben zu Figur 1 beschrieben die ASR durchgeführt.

In der abgebildeten erfindungsgemäßen Systemarchitektur ist es somit aufgrund des direkt an die ECU 60 angeschlossenen Raddrehzahlsensoren (50a, 50b, 50c, 50d) an die Steuereinheit 60 möglich, eine ABS-Bremsung bzw. eine Anti-Schlupf-Regelung durchzuführen, auch wenn das Druckregelmodul 30 ausgefallen ist und nicht mehr mit der Steuereinheit 60 kommunizieren kann.

### BEZUGSZEICHENLISTE

- 10: zentrale Einheit
- 20: Stromversorgung
- 30: Druckregelmodul (EPM)
- 40, 40a, 40b: Drucksteuerventil (PCV)
- 41: Schalter
- 50, 50a, 50b, 50c, 50d: Raddrehzahlsensor (WSS)
- 60: Steuereinheit (ECU)
- 70: Datenübertragungsleitung (z.B. CAN)
- 71: Sensorleitung
- 72: Ansteuerleitung (PCVs)
- 73: Bremsleitung
- 80: Fahrzeug
- 81: Druckvorratsbehälter
- 82: Vorratsleitung
- 82ab: Druckleitung (EPM zu Bremszylindern der Vorderachse)
- 82c, 82d: Druckleitung (EPM zu Bremszylindern der Hinterachse)
- 83: Fußbremsmodul
- 84a, 84b: Fahrzeugrad an Vorderachse
- 84c, 84d: Fahrzeugrad an Hinterachse
- 85a, 85b, 85c, 85d: Bremszylinder

## Patentansprüche

1. Bremssystem für ein Fahrzeug, aufweisend:
wenigstens ein Druckregelmodul (30), dazu konfiguriert, einen in wenigstens einen Bremszylinder (85) eines Rades (84) des Fahrzeugs einzuleitenden Sollbremsdruck einzustellen,
wenigstens ein Raddrehzahlsensor (50), dazu konfiguriert, den Radschlupf des einen Rades (84) des Fahrzeugs zu erfassen,
wenigstens ein Drucksteuerventil (40), welches dem Bremszylinder (85) eines Rades (84) zugeordnet ist und dazu konfiguriert ist, den an dem Bremszylinder (85) anliegenden Bremsdruck radschlupfabhängig zu steuern,
eine zentrale Recheneinheit (60), dazu konfiguriert, das wenigstens eine Druckregelmodul (30) und das wenigstens eine Drucksteuerventil (40) mindestens ausgehend von einem Bremssignal und den erfassten Daten des wenigstens einen Raddrehzahlsensors (50) zu steuern,
wobei
der wenigstens eine Raddrehzahlsensor (50) eine direkte Verbindung zur zentralen Recheneinheit (60) aufweist, die dazu konfiguriert ist, durch den Raddrehzahlsensor (50) erfasste Daten zu übertragen, und **dadurch gekennzeichnet, dass**
die zentrale Recheneinheit (60) und das wenigstens eine Druckregelmodul (30) in einer zentralen Einheit (10) angeordnet sind.

2. Bremssystem gemäß Anspruch 1, wobei die zentrale Recheneinheit (60) und das wenigstens eine Druckregelmodul (30) ein gemeinsames Gehäuse aufweisen.

3. Bremssystem gemäß einem der vorhergehenden Ansprüche, wobei das Bremssystem für jedes zu bremsende Rad (84) des Fahrzeugs einen Raddrehzahlsensor (50) aufweist.

4. Bremssystem gemäß einem der vorhergehenden Ansprüche, wobei das Bremssystem für jeden zu steuernden Bremszylinder (85) eines Rades (84) des Fahrzeugs ein Drucksteuerventil (40) aufweist.

5. Bremssystem gemäß einem der vorhergehenden Ansprüche, wobei das Bremssystem neben dem wenigstens einen Raddrehzahlsensor (50) wenigstens einen weiteren Sensor, insbesondere einen Sensor zur Erfassung des Bremsdrucks, aufweist, wobei dieser wenigstens eine weitere Sensor ebenfalls eine Verbindung zur zentralen Recheneinheit (60) aufweist, die dazu konfiguriert ist, Daten direkt zu übertragen.

6. Bremssystem gemäß einem der vorhergehenden Ansprüche, wobei das Bremssystem mehrere Druckregelmodule (30) aufweist und für jede Achse oder für jede Doppelachse des Fahrzeugs mindestens ein Druckregelmodul (30) vorgesehen ist.

## Claims

1. Braking system for a vehicle, having:
at least one pressure regulating module (30), configured to set a setpoint brake pressure to be introduced into at least one brake cylinder (85) of a wheel (84) of the vehicle,
at least one wheel speed sensor (50), configured to detect the wheel slip of the one wheel (84) of the vehicle,
at least one pressure control valve (40), which is assigned to the brake cylinder (85) of a wheel (84) and is configured to control the brake pressure applied at the brake cylinder (85) in dependence on the wheel slip,
a central processing unit (60), configured to control the at least one pressure regulating module (30) and the at least one pressure control valve (40) at least starting from a brake signal and the detected data of the at least one wheel speed sensor (50),
wherein
the at least one wheel speed sensor (50) has a direct connection to the central processing unit (60), which is configured to transmit data detected by the wheel speed sensor (50), and **characterised in that**
the central processing unit (60) and the at least one pressure regulating module (30) are arranged in a central unit (10).

2. Braking system according to claim 1, wherein the central processing unit (60) and the at least one pressure regulating module (30) have a common housing.

3. Braking system according to any of the preceding claims, wherein the braking system has a wheel speed sensor (50) for each wheel (84) to be braked of the vehicle.

4. Braking system according to any of the preceding claims, wherein the braking system has a pressure control valve (40) for each brake cylinder (85) to be controlled of a wheel (84) of the vehicle.

5. Braking system according to any of the preceding claims, wherein the braking system has, in addition to the at least one wheel speed sensor (50), at least one further sensor, in particular a sensor for detecting the brake pressure, wherein this at least one further sensor also has a connection to the central processing unit (60), which is configured to transmit data directly.

6. Braking system according to any of the preceding claims, wherein the braking system has multiple pressure regulating modules (30) and at least one pressure regulating module (30) is provided for each axle or for each twin axle of the vehicle.

## Revendications

1. Système de freinage pour un véhicule, comprenant au moins un module (30) de régulation de pression, configuré pour régler une pression de freinage de consigne à former dans au moins un cylindre (85) de frein d'une roue (84) du véhicule,
au moins un capteur (50) de vitesse de roue, configuré pour détecter le patinage de ladite une roue (84) du véhicule,
au moins une vanne (40) de commande de pression, associée au cylindre (85) de frein d'une roue (84) et configurée pour commander la pression de freinage appliquée au cylindre (85) de frein en fonction du patinage de la roue, une unité centrale (60) de calcul configurée pour commander ledit au moins un module (30) de régulation de pression et ladite au moins une vanne (40) de commande de pression au moins à partir d'un signal de freinage et des données acquises dudit au moins un capteur (50) de vitesse de roue,
dans lequel
le au moins un capteur (50) de vitesse de roue a une connexion directe avec l'unité centrale (60) de calcul qui est configurée pour transmettre des données acquises par le capteur (50) de vitesse de roue, et l'unité centrale (60) de calcul et le au moins un module de régulation de pression (30) sont disposés dans une unité centrale (10).

2. Système de freinage selon la revendication 1, dans lequel l'unité centrale (60) de calcul et le au moins un module (30) de régulation de pression ont un boîtier commun. i

3. Système de freinage selon l'une des revendications précédentes, dans lequel le système de freinage comprend un capteur (50) de vitesse de roue pour chaque roue (84) à freiner du véhicule.

4. Système de freinage selon l'une quelconque des revendications précédentes, dans lequel le système de freinage comprend une vanne (40) de commande de pression pour chaque cylindre (85) de frein à commander d'une roue (84) du véhicule.

5. Système de freinage selon l'une quelconque des revendications précédentes, dans lequel le système de freinage comprend, outre ledit au moins un capteur (50) de vitesse de roue, au moins un autre capteur, en particulier un capteur pour détecter la pression de freinage, ledit au moins un autre capteur comprenant également une connexion à l'unité centrale (60) de calcul qui est configurée pour transmettre directement des données.

6. Système de freinage selon l'une quelconque des revendications précédentes, dans lequel le système de freinage comprend plusieurs modules (30) de régulation de pression et au moins un module (30) de régulation de pression est prévu pour chaque essieu ou pour chaque double essieu du véhicule.
